# EUROPÄISCHE PATENTANMELDUNG

(11) **EP 0 802 080 A2**
(43) Veröffentlichungstag der Anmeldung: **22.10.1997**
(21) Anmeldenummer: 97105576.9
(22) Anmeldetag: 04.04.1997
(51) Int. Cl.: B60P 3/36

(54) **Kantenprofilsystem für Wohnanhänger, Wohnmobile oder dergleichen**

(30) Priorität: 20.04.1996 DE 19615768
(71) Anmelder: Tabbert Caravan GmbH, 36391 Sinntal-Mottgers (DE)
(72) Erfinder: Schönhorst, Martin, 63477 Maintal (DE)
(74) Vertreter: Matschkur, Götz, Lindner Patent- und Rechtsanwälte

(57) **Zusammenfassung**

Kantenprofilsystem für Fahrzeuge wie Wohnanhänger, Wohnmobile, Transportfahrzeuge od.dgl. mit einem die Kanten zwischen zwei Wänden bzw. zwischen einer Wand (4) und dem Dach (5) überdeckenden Metallprofil, wobei auf eine mit dem Korpus des Fahrzeugs verbindbare, außen auf die Kante aufzusetzende, eine L-förmige Grundform aufweisende Kantenleiste (6) ein gerundetes Hohlkammerprofil aufsteckbar ist.

## Beschreibung

Die Erfindung bezieht sich auf ein Kantenprofilsystem für Fahrzeuge wie Wohnanhänger, Wohnmobile, Transportfahrzeuge od.dgl., mit einem die Kanten zwischen zwei Wänden bzw. zwischen einer Wand und dem Dach überdeckenden Metallprofil.

Herkömmliche Kantenrandprofile sind einteilig und bestehen im wesentlichen aus einer inneren rechtwinkligen Anlagefläche und einer Außenschale, die mit einem Steg verbunden sind. Die innere rechtwinklige Anlagefläche und die Außenschale bilden dabei zwei mit ihren Einschuböffnungen um 90° versetzte Aufnahmeschuhe für die Korpusteile. Diese Steckprofile bilden eine enorme Kältebrücke und lassen sich im übrigen bei irgendwelchen Beschädigungen oder Reparaturarbeiten nur mit erheblichem Aufwand austauschen.

Der Erfindung liegt daher die Aufgabe zugrunde, ein Kantenprofilsystem der eingangs genannten Art so auszugestalten, daß die Gefahr einer durchgehenden Kältebrücke vermieden ist und im Bedarfsfall ein einfacher Austausch stattfinden kann.

Zur Lösung dieser Aufgabe ist erfindungsgemäß vorgesehen, daß auf eine mit dem Fahrzeug verbindbare, außen auf die Kante aufzusetzende, eine L-förmige Grundform aufweisende Kantenleiste ein gerundetes Hohlkammerprofil aufsteckbar ist.

Durch die erfindungsgemäße Ausgestaltung mit einem Innen- und einem Außenprofil ergeben sich gegenüber den bisherigen einteiligen Kantenrundprofilen eine ganze Reihe von Vorteilen. Die Kantenleiste kann sehr einfach von außen auf den Korpus aufgeschraubt werden und man benötigt nicht innere Anlageflächen mit dem Nachteil der durchgehenden, Kältebrücken bildenden Verbindungsstege. Infolge des Aufsteckens des Hohlkammerprofils auf die Kantenleiste kann dieses Profil nicht nur im Bedarfsfall sehr einfach ausgetauscht werden, sondern man kann dabei auch zusätzlich vorsehen, daß das Hohlkammerprofil über seine wegen des Überstandes erhöhte Schutzfunktion für die Kante hinaus auch noch für weitere Funktionszwecke zur Verfügung steht, insbesondere daß es zur Aufnahme von Lastträgersystemen, wie Dachreling, Gepäckkoffer, Surfbretthalter, Skihalter u.dgl. ausgebildet ist.

Zu diesem Zweck kann in weiterer Ausgestaltung der Erfindung vorgesehen sein, daß das Hohlkammerprofil oberhalb des Verrastbereichs mit der Kantenleiste eine insbesondere C-förmige Profilnut umfaßt, in welche eine Vielzahl von unterschiedlichen Lastenträgersystemen verankernd einsetzbar sind.

Zur einfachen Steckverbindung der Kantenleiste mit dem Hohlkammerprofil kann erfindungsgemäß vorgesehen sein, daß die Kantenleiste am einen Schenkel einen abgewinkelten, in eine Nut des Hohlkammerprofils einrastenden, im wesentlichen L-förmigen Verankerungssteg aufweist, und daß der andere Schenkel der Kantenleiste von einem abgewinkelten Haltesteg des Hohlkammerprofils hintergriffen wird.

Durch diese Ausbildung ergibt sich, insbesondere wenn man den freien Schenkel des Verankerungsstegs noch mit wenigstens einer Verrastzähnung zur Verkeilung in der Nut versieht - die ihrerseits ggf. ebenfalls zahnartig profiliert ausgebildet sein könnte - eine sehr einfache Steckrastverbindung, die auch ohne zusätzliches Verkleben oder eine zusätzliche Verschraubung bereits eine feste Verankerung des Hohlkammerprofils gewährleistet. Insbesondere im Falle, daß das Hohlkammerprofil zur Aufnahme von Lastträgersystemen ausgebildet ist, ist aber selbstverständlich dann eine zusätzliche Schraubverbindung, z.B. zwischen dem hochstehenden Schenkel des Verankerungsstegs und dem anliegenden Schenkel des Hohlkammerprofils, vorzusehen, da in solchen Fällen ja erhebliche Kräfte über das Kantenprofilsystem aufgenommen werden müssen.

Dabei liegt es schließlich auch noch im Rahmen der Erfindung, die Anlageflächen der Kantenleiste und/oder des Hohlkammerprofils zur Bildung von Kammern zur Aufnahme von Dicht- und/oder Klebemitteln profiliert auszubilden. Durch solche Dicht- und Klebemittel wird zum einen eine bessere Halterung der Kantenleiste am Korpus des Fahrzeugs erzielt und insbesondere eine Abdichtung der Stoßfuge zwischen den im Bereich der Kante aneinanderstoßenden Wänden, also beispielsweise einer Seitenwand mit der Bugwand oder der Heckwand, oder aber einer Seitenwand mit dem Dach. Darüber hinaus können etwaige Kammern zwischen den Profilen bei Ausfüllen mit einem Kleber für einen festeren und auch klirrfreien Sitz des Hohlkammerprofils auf der Kantenleiste sorgen.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:
- Fig. 1: eine perspektivische Teilansicht des hinteren Eckbereichs eines Wohnwagens mit einem erfindungsgemäßen Kantenprofilsystem,
- Fig. 2: einen vergrößerten Schnitt durch die Kante zwischen der Seitenwand und dem Dach längs der Linie II-II in Fig. 1,
- Fig. 3 bis 5: Schnittbilder durch die Kantenleiste und das Hohlkammerprofil sowie das von ihnen gebildete Kantenprofilsystem bei einer etwas abgewandelten Ausbildung gegenüber Fig. 2, und
- Fig. 6: einen schematischen Schnitt durch eine Wohnwagenkante mit einem herkömmlichen Kanten-Rundprofil.

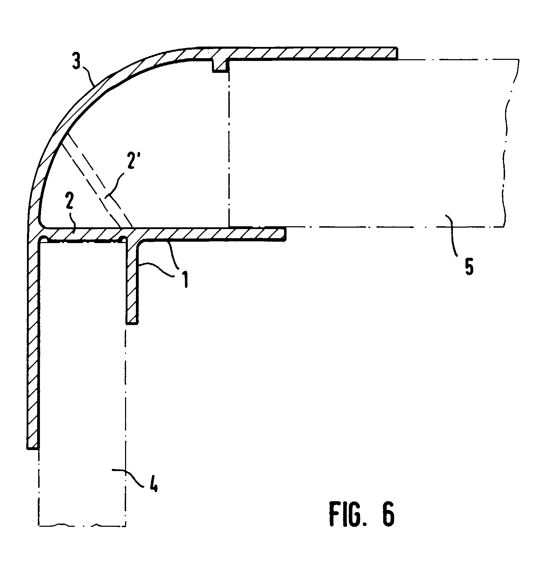

In Fig. 6 erkennt man die thermisch ungünstigen Verhältnisse, die sich bei den bekannten einteiligen Kanten-Rundprofilen ergeben, bei denen ein innerer Anlagewinkel 1 über einen Steg 2, der auch an anderer Stelle angeordnet sein könnte wie es bei 2' angedeutet ist, mit einer gerundeten Außenschale 3 verbunden ist. Die Außenschale 3 und der innere Anlagewinkel 1 bilden dabei Aufnahmeschuhe für den Korpus der Wand 4 und des Daches 5. Abgesehen von der schwierigen Auswechselbarkeit solcher Kanten-Rundprofile, die auch keine zusätzlichen Funktionen übernehmen können, ist vor allem die entstehende Kältebrücke äußerst nachteilig.

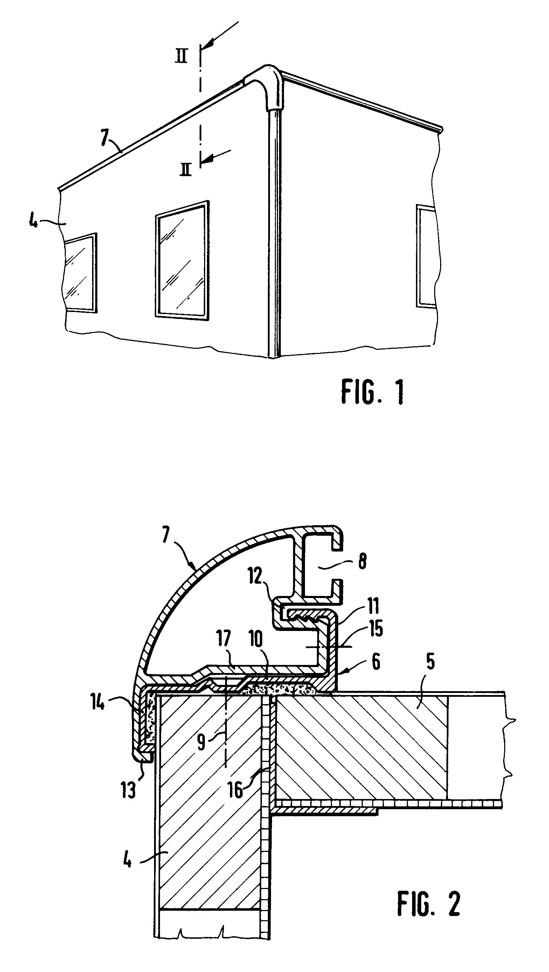

Erfindungsgemäß ist ein in einem ersten Ausführungsbeispiel anhand der Figuren 1 und 2 gut erkennbares Kantenprofilsystem vorgesehen, bei welchem die stumpf aneinander anstoßenden Wände, im dargestellten Ausführungsbeispiel die Seitenwand 4 und das Dach 5, außenseitig von einem in seiner Grundform L-förmigen Kantenleiste 6 überdeckt sind, auf die ein Hohlkammerprofil 7 verrastend aufsteckbar ist. Die Besonderheit gegenüber dem in Fig. 6 angedeuteten Stand der Technik liegt dabei zum einen darin, daß keine Kältebrücke zum Innenraum hin mehr besteht, daß das die gewünschte Kantenrundung bildende Hohlkammerprofil 7 leicht ausgewechselt werden kann, und daß darüber hinaus durch den Überstand nach oben über das Dach eine erheblich verbesserte Schutzwirkung gegeben ist.

Ganz wesentlich für die Vorteilhaftigkeit des erfindungsgemäßen Kantenprofilsystems ist die Möglichkeit, das Hohlkammerprofil 7 zusätzlich für weitere Funktionszwecke einzusetzen, insbesondere zur Aufnahme von Lastträgersystemen. Im dargestellten Ausführungsbeispiel ist hierfür eine C-förmige Profilnut 8 eingeformt, in welche die Verankerungsglieder für solche Lastträgersysteme, wie eine Dachreling, Gepäckkoffer, Surfbretthalter, Skihalter od.dgl., befestigend eingreifen können.

Während die Kantenleiste 6 bei 9 mittels Schrauben am Korpus des Wohnwagens od.dgl. befestigt ist, erfolgt die Halterung des Hohlkammerprofils 7 in erster Linie über Steckrastverbindungen. Zu diesem Zweck ist zum einen am Schenkel 10 der Kantenleiste 6 ein im wesentlichen L-förmiger Verankerungssteg 11 abgewinkelt, der in eine Nut 12 des Hohlkammerprofils 7 eingreift und zum anderen ist das Hohlkammerprofil 7 mit einem abgewinkelten Haltesteg 13 versehen, der den zweiten Schenkel 14 der Kantenleiste 6 hintergreift. In Verbindung mit einer in Fig. 2 angedeuteten Zähnung der Anlagewand in der Nut 12 und des daran anliegenden Schenkels des Verankerungsstegs 11 ergibt sich eine sehr haltbare Rastverbindung, die - jedenfalls wenn man von zusätzlichen Belastungen wie der Aufnahme von Dachträgersystemen od.dgl. im Hohlkammerprofil 7 absieht - für eine ausreichende Halterung selbst ohne zusätzliches Verkleben des Hohlkammerprofils auf der Kantenleiste sorgt. Wenn zusätzliche Halterungsfunktionen über die C-förmige Profilnut 8 übernommen werden müssen, so sollte zusätzlich eine Verschraubung der beiden Profile stattfinden, wie dies bei 15 angedeutet ist.

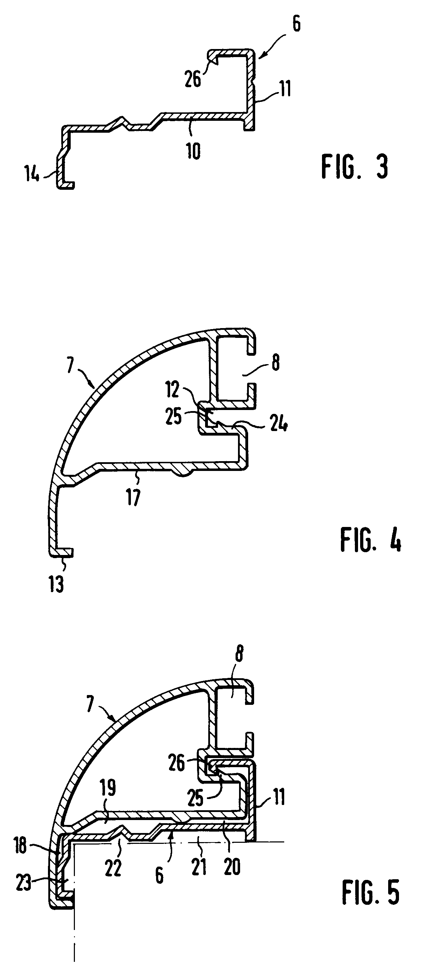

Die in Fig. 2 nur andeutungsweise erkennbaren Klebe- oder Dichtstellen sind bei dem Ausführungsbeispiel nach den Figuren 3 bis 5 besser erkennbar. Wegen des - abgesehen von einigen Details - gleichen Aufbaus des Kantenprofilsystems nach den Figuren 3 bis 5, bezogen auf die in Fig. 2 wiedergegebene Ausführungsform, sind die Teile jeweils mit gleichen Bezugszeichen versehen worden. Man erkennt dabei, daß der die Verbindungsfuge 16 zwischen Seitenwand 4 und Dach 5 überbrückende Anlageschenkel 10 und darüber hinaus auch der auf diesem aufliegende Anlageschenkel 17 des Hohlkammerprofils profiliert ausgebildet sind, so daß - dies ergibt sich am deutlichsten aus Fig. 5 - eine Reihe von Kammern 18 bis 23 gebildet sind, die zur Aufnahme von Dicht- oder Klebemitteln dienen können wie dies bereits weiter oben anhand des Ausführungsbeispiels nach Fig. 2 angedeutet wurde.

Bei dem Ausführungsbeispiel nach den Figuren 3 bis 5 ist die untere Begrenzungswand 24 der Nut 12 des Hohlkammerprofils 7 mit Nasen oder aber auch einer durchgehenden Rippe 25 versehen, die von einem abgewinkelten Haken 26 am freien Ende des Verankerungsstegs 11 hintergriffen wird, so daß eine gute Rastverankerung beim Aufstecken erzielbar ist.

Die Erfindung ist nicht auf das dargestellte Ausführungsbeispiel beschränkt. So wäre es neben einer anderen Formgebung sowohl der Kantenleiste als auch des Hohlkammerprofils auch möglich, andere Arten von Halterungseinrichtungen als die gezeigte C-förmige Profilnut 8 zur Aufnahme von Lastträger-Systemen vorzusehen. Daß - wie in Fig. 1 erkennbar ist - das erfindungsgemäße Kantenprofilsystem im Bereich der Wohnwagenecken spezielle, vorzugsweise aus Kunststoff bestehende Verbindungsteile aufweist, ist auch von den nicht überstehenden durchgehenden einstückigen Kantenrandprofilen gemäß Fig. 6 her bekannt und daher im einzelnen nicht mit dargestellt.

## Patentansprüche

1. Kantenprofilsystem für Fahrzeuge wie Wohnanhänger, Wohnmobile, Transportfahrzeuge od.dgl., mit einem die Kanten zwischen zwei Wänden bzw. zwischen einer Wand und dem Dach überdeckenden Metallprofil, dadurch gekennzeichnet, daß auf eine mit dem Korpus des Fahrzeugs verbindbare, außen auf die Kante aufzusetzende, eine L-förmige Grundform aufweisende Kantenleiste (6) ein gerundetes Hohlkammerprofil (7) aufsteckbar ist.

2. Kantenprofilsystem nach Anspruch 1, dadurch gekennzeichnet, daß das Hohlkammerprofil (7) zur Aufnahme von Lastträger-Systemen ausgebildet ist.

3. Kantenprofilsystem nach Anspruch 2, daduch gekennzeichnet, daß das Hohlkammerprofil (7) oberhalb des Verrastbereichs mit der Kantenleiste (6) eine, insbesondere C-förmige, Profilnut (8) umfaßt.

4. Kantenprofilsystem nach einem der Ansprüche 1 bis 3, dadurch gekennzeichnet, daß die Kantenleiste (6) am einen Schenkel (10) eine in eine Nut (12) des Hohlkammerprofils (7) einrastenden, im wesentlichen L-förmigen Verankerungssteg (11) aufweist, und daß der andere Schenkel (14) der Kantenleiste (6) von einem abgewinkelten Haltesteg (13) des Hohlkammerprofils (7) hintergriffen wird.

5. Kantenprofilsystem nach Anspruch 4, dadurch gekennzeichnet, daß der freie Schenkel des Verankerungsstegs (11) mit wenigstens einer Zahnkante zur Verkeilung oder Verrastung in der Nut (12) versehen ist.

6. Kantenprofilsystem nach einem der Ansprüche 1 bis 5, dadurch gekennzeichnet, daß die Anlageflächen der Kantenleiste (6) und/oder des Hohlkammerprofils (7) zur Bildung von Kammern (18 bis 23) zur Aufnahme von Dicht- und/oder Klebemitteln profiliert sind.
